# EUROPÄISCHE PATENTSCHRIFT

(11) **EP 1 744 841 B1**
(45) Veröffentlichungstag und Bekanntmachung des Hinweises auf die Patenterteilung: **09.03.2016**
(21) Anmeldenummer: 05747548.5
(22) Anmeldetag: 03.05.2005
(51) Int. Cl.: B09B 1/00, B09C 1/00

(54) **GASBRUNNEN UND VERFAHREN ZUR UMRÜSTUNG VON IN DEPONIEN ANGEORDNETEN GASBRUNNEN**
GAS WELL AND METHOD FOR RETROFITTING GAS WELLS LOCATED IN LANDFILLS
FONTAINE DE GAZ ET PROCEDE POUR AMELIORER DES FONTAINES DE GAZ SITUEES DANS DES DECHARGES

(30) Priorität: 11.05.2004 DE 102004023740
(43) Veröffentlichungstag der Anmeldung: 24.01.2007
(73) Patentinhaber: CDM Consult GmbH, 44793 Bochum (DE)
(72) Erfinder: KANITZ, Jürgen, 44805 Bochum (DE); FORSTING, Jürgen, 48149 Münster (DE)
(74) Vertreter: Vomberg, Friedhelm
(86) Internationale Anmeldenummer: PCT/DE2005/000814
(87) Internationale Veröffentlichungsnummer: WO 2005/110631

(56) Entgegenhaltungen:
- EP-A- 0 747 142
- EP-A2- 0 304 712
- WO-A-03/004182
- DE-A- 3 131 100
- DE-A- 3 733 365
- US-A- 3 161 235
- US-A- 5 226 749

## Beschreibung

Die Erfindung betrifft einen Gasbrunnen zur Methangasgewinnung aus Deponien, mit einer in das Haufwerk aus Abfällen eingebrachten Bohrung, in der ein Filterrohr angeordnet ist, wobei zwischen dem Filterrohr und dem Mantel der Bohrung eine Materialsäule angeordnet ist, die unterhalb der Geländeoberkante (GOK) gasundurchlässig ist und die in den darunter liegenden Bereichen aus einer Kiesschüttung besteht, wobei in das Filterrohr mindestens ein im Durchmesser kleineres Saugrohr eingezogen ist, um dessen Außenmantel über eine begrenzte Höhe der Zwischen dem Filterrohr und dem Saugrohr verbleibende Raum und der in der in der gleichen Höhe liegende Bereich der Kiesschüttung mit einem aushärtbaren Material zu einer gasundurchlässigen Zone verfüllt ist, so dass die unterhalb dieser Zone liegenden Bereiche nur über das Saugrohr besaugbar sind.

Die Erfindung betrifft ferner ein Verfahren zur Umrüstung von in Deponien angeordneten Gasbrunnen, die in einer Bohrung ein durchmesserkleineres Filterrohr aufweisen, wobei zwischen dem Filterrohr und dem Bohrungsmantel eine Schüttung angeordnet ist, die unterhalb der GOK zumindest im wesentlichen gasdicht und im darunter liegenden Bereichen gasdurchlässig ist.

Unter den vorgenannten Abfällen werden solche Gemische verstanden, die aus Hausmüll oder hausmüllähnlichen Gewerbeabfällen bestehen und neben nicht zersetzbaren anorganischen Bestandteilen organische Bestandteile aufweisen, die sich bei Anwesenheit von Sauerstoff und einer hinreichenden Feuchtigkeit aerob und bei Abwesenheit von Sauerstoff anaerob zersetzen.

In früheren Jahren sind anfallenden Abfälle zu Müllhalden aufgeschichtet oder in vorhandene oder geschaffene Gruben abgekippt worden. Nach Erschöpfung der Deponie-Kapazität und dem Schließen dieser Deponien wurden die Haufwerke mehr oder weniger abgedeckt und in Einzelfällen begrünt. Um zu verhindern, dass die sich in dem aufgeschichteten Haufwerk einstellende anaerobe Zersetzung der organischen Bestandteile zu einer unkontrollierten Methangasbildung führt, sind in Deponien sogenannte Gasbrunnen eingezogen worden, die entweder gebohrt oder mittels eines Kaminziehrohres erstellt wurden. Solche Brunnen weisen zumeist einen Durchmesser von mindestens 800 mm auf und sind, abgesehen von einer obersten Abdichtung über den gesamten Tiefenbereich verfiltert. Die obere Abdichtung besteht aus bindigem Material, z. B. Ton, der sich bis zu 3 oder 4 m tief erstreckt. Der darunter liegende Bereich ist mit einer gasdurchlässigen Kiesschüttung versehen, die sich (ebenso wie die genannte Abdichtung) um ein Filterrohr erstreckt, über das Gas abgesaugt werden kann. Wird an dem Brunnen ein Unterdruck angelegt, so strömt das Gas aus porösen Bereichen in Richtung des Filterrohres. Die aus dem Haufwerk abgezogene Gasmenge ist direkt proportional zu der Porosität der jeweils abgesaugten Bereiche. Daher nimmt mit größerer Tiefe und hiermit regelmäßig verbundenem geringen Porenvolumen der Gasfluss kontinuierlich ab. Im Extremfall kann der Gasfluss völlig zum Erliegen kommen. Zur Förderung der anaeroben Umsetzung muss in den Gasbrunnen ein Unterdruck erzeugt werden, um Deponiegas abzuziehen. Die anaerobe Umsetzung der organischen Abfallstoffe ist zwar ein gasbildender Prozess, jedoch entsteht hierbei in beträchtlichen Mengen Wasserstoffgas, Methan und Kohlendioxid, deren wachsende Partialdrucke die weitere anaerobe Umsetzung hemmen. Aus diesem Grund muss das gebildet Gasgemisch stetig abgezogen werden, um die Umsetzung des biogenen Materials aufrecht zu erhalten. Die Reichweite, d. h. der Saugradius eines Gasbrunnens ist aus vorstehenden Gründen im oberen Bereich der Brunnen, d. h. in geringeren Tiefen relativ groß und wird zu größeren Tiefen stets geringer. Als geometrische Form ergibt sich somit ein Trichter als Absaugbereich. Dies führt dazu, dass in den meisten Fällen im oberen Bereich bereits große Mengen an Fremdluft angesaugt werden, so dass das Haufwerk der Deponie im oberen Bereich massiv übersaugt wird.

In dem nächstliegeden Stand der Technik, WO 03/004182 A2,wird dargelegt, dass eine stärkere Saugung über Gasbrunnen nur zu einer oberflächennahen Belüftung und etwaigen Umsetzung der biogenen Organik in den oberen Schichten führt. In tieferen Schichten erfolgt hingegen kaum eine oder keine Änderung der Umsetzungsbedingungen, so dass durch den biologischen Abbau in Folge eines Hydrolyseprozesses organische Verbindungen in eine wassergelöste Form übergehen und über das Sickerwasser abtransportiert werden. Dies kann zu einer möglichen Grundwasserbelastung (gemessen als CSB- und NH₄-Gehalt im Sickerwasser) führen. Zur Minimierung des ansonsten zu tätigenden Aufwandes und zur Beschleunigung des Abbaus der biogenen Organik wird in der WO 03/004182 A2 vorgeschlagen, im Bereich des Deponiegrundes eine größere Gasmenge abzusaugen als die in dem Bereich durch Zersetzung entstehende Gasmenge, so dass über die Außenluft Sauerstoff in das Haufwerk eindringt und der Zersetzungsprozess in eine zumindest weitgehend aerobe Zersetzung überführt wird. Eine erste Möglichkeit zur Verhinderung der "Übersaugung" der geländeoberflächennahen Schichten besteht darin, dass je nach Höhe des aufgeschichteten Haufwerkes pro Saugleitung über beabstandet angeordnete, vorzugsweise ringförmige Saugöffnungen Deponiegas mit einem angelegten Unterdruck zwischen 2 x 10³ Pa und 3 x 10⁴Pa abgesaugt und/oder die über die Saugleitung geförderte Flussrate des Deponiegases auf maximal 250m³/h beschränkt wird. Diese Maßnahme dient dazu, dass der Methangehalt des Deponiegases deutlich höher ist und insgesamt größere Deponiegasmengen und damit deutlich höhere Energiegehalte gewonnen werden können. Hierzu wird eine Vorrichtung verwendet, bei der eine in das Haufwerk eingebrachte Bohrung mit einem Durchmesser von mindestens 200 mm eine Saugleitung mit deutlich geringerem Durchmesser aufweist. Der verbleibende Ringraum zwischen dem Saugleitungsaußenmantel und dem Bohrungsmantel ist in abwechselnder Folge mit einem als Filterstrecke dienenden Kiesbett und einem zumindest weitgehend gasundurchlässigen Material, vorzugsweise bindigem Material wie Quellton ausgefüllt, wobei die aus bindigem Material bestehenden Ringräume gegen die Saugleitung mit einem Vollrohr abgedeckt sind und im Bereich der Filterstrecke, d. h. in Höhe der jeweiligen Kiesbetten, die Saugöffnungen angeordnet sind. Vorzugsweise kann ein im Filterrohr höhenverstellbar angeordneter Liner vorgesehen sein, der vorhandene Filterstrecken wahlweise abdeckt oder freigibt. Zwischen zwei übereinander liegenden Filterstrecken liegt jeweils ein relativ gasdichter Bereich aus bindigem Material, wie z. B. Ton. Die abgeführten Deponiegase, insbesondere das entstehende Methan können somit durch den eingestellten Unterdruck und/oder die Stellung des Liners dosiert werden.

In der EP 0 747 142 wird ein Verfahren zur Entfernung von Schadstoffen aus einem kontaminierten Bereich offenbart, bei dem zunächst ein Bohrloch gefertigt wird, in das eine Heberleitung mit einem oberen undurchlässigen Bereich und einem unteren perforierten Bereich eingebracht wird. Die äußeren Ringräume zwischen diesem Rohr und der Erdbohrung sind schichtweise mit Vergussmörtel oder Betonit verfüllt.

Inmitten des eingezogenen Rohres ist ein Vakuumextraktionsrohr vorgesehen, dessen Ringraum unten abgedichtet ist. Die Dichtung kann dabei aus Gummi, Kunststoff, Metallteilen oder O-Ringen bestehen.

Problematisch sind jedoch die durch Einziehung neuer Saugleitungen entstehenden Kosten. Sofern die Deponie geschlossen und bereits eine Oberflächenabdeckung bzw. Rekultivierungsmaßnahmen erfolgt sind, ist es zudem technisch aufwendig, aber auch genehmigungsrechtlich nur unter großen Schwierigkeiten möglich, zusätzliche Brunnen bzw. Saugleitungen in den Deponiekörper einzubringen.

Es ist daher Aufgabe der vorliegenden Erfindung, die vorhandenen Gasbrunnen derart umzugestalten, dass die Deponiegasgewinnung ohne hohen technischen Aufwand verbessert wird.

Diese Aufgabe wird durch einen Gasbrunnen nach Anspruch 1 gelöst, der vorzugsweise mittels eines Verfahrens nach Anspruch 6 errichtet worden ist. Weiterbildungen des Gasbrunnens sowie des Verfahrens werden in den entsprechenden Unteransprüchen beschrieben.

Der Kerngedanke der vorliegenden Erfindung besteht darin, in das vorhandene Filterrohr des Gasbrunnens, das nur in den GOK-nahen Schichten von einer gasdichten Masse und im darunter liegenden Bereich von einer Kiesschüttung umgeben ist, ein im Durchmesser kleineres Saugrohr einzuziehen, um dessen Außenmantel über eine begrenzte Höhe der zwischen dem Filterrohr und dem Saugrohr (oder auch bei mehreren Saugrohren allen Saugrohren) verbleibende Raum und der in gleicher Höhe liegende Bereich der Kiesschüttung mit einem ausgehärteten Material vorzugsweise aus Kunststoffschaum zu einer undurchlässigen Zone verfüllt sind, so dass die unterhalb dieser Zone liegenden Bereiche nur über das betreffende Saugrohr besaugbar sind. Erfindungsgemäß ist hierzu vorgesehen, dass über den Außenmantel des Saugrohrs an zwei im Abstand angeordneten Stellen jeweils ein aufblasbarer Schlauch gezogen ist, der nach Absenkung des Saugrohrs im Filterrohr so aufblasbar ist, dass er sich abdichtend an den Filterrohrinnenmantel anlegt und hiernach über eine Leitung ein aushärtbares Material in den Zwischen den Schläuchen verbleibenden Ringraum in das Filterrohr unter Druck so einbringbar ist, dass es sich im verbleibenden Ringraum sowie in den höhengleichen um das Filterrohr angeordneten gasdurchlässigen Bereichen ergießt und anschließend zu einer gasdichten Masse aushärtet, wobei der Bereich unterhalb dieser gasdichten Masse nur noch über das Saugrohr absaugbar ist. In der vormaligen Kiesschüttung wird somit mindestens eine gasdichte Zone aufgebaut, gegebenenfalls mehrere übereinander liegende gasdichte Zonen, unter der bzw. unter denen über das eine Saugrohr bzw. über verschiedene Saugrohre Deponiegas abgesaugt werden kann. Sind mehrere Saugrohre vorhanden, so können über jedes Saugrohr unterschiedliche Unterdrucke und/oder Fördermengen eingestellt werden, die gegebenenfalls in Abhängigkeit der Partialdruckkonzentrationen, insbesondere des Methans regelbar sind. Vorzugsweise liegen in abwechselnder Folge gasdichte Zonen und Filterstrecken vor, die durch jeweils ein Saugrohr absaugbar sind. Als aushärtbares Material wird vorzugsweise ein Kunststoff, insbesondere ein aufgeschäumtes Polyurethan verwendet. Alternativ kann auch niedrigviskos angerührtes Material wie Mineralien, Ton, das gegebenenfalls mit Kunststoff vermischt ist, verwendet werden. Um eine hinreichende Gasförderung über die Saugrohre gewährleisten zu können, soll deren Durchmesser vorzugsweise 50 bis 75 mm betragen. Die Brunnenbohrung, die durch vorhandene Gasbrunnen vorgeben ist, und/oder durch ein Brunnenrohr definiert ist, beträgt vorzugsweise mindestens 800 mm.

Ein vorhandener Gasbrunnen, der in einer Bohrung ein durchmesserkleineres Filterrohr aufweist, wird wie folgt umgerüstet. Vorausgesetzt wird hierbei, dass zwischen dem Filterrohr und dem Bohrungsmantel eine Schüttung angeordnet ist, die unterhalb der Geländeoberkante gasdicht ist und in darunter liegenden Bereichen gasdurchlässig ist. Im Regelfall ist die Dicke der gasundurchlässigen Schicht, die aus Ton oder ähnlichen dichten Materialien besteht, 3 bis 4 m. Die darunter liegende Schüttung, die auch als Filterstrecke bezeichnet wird, besteht aus Kies.

In das vorhandene Filterrohr wird mindestens ein Saugrohr eingezogen, über dessen Außenmantel an zwei im Abstand angeordneten Stellen jeweils ein aufblasbarer Schlauch oder ein ähnlich wirkendes Dichtsystem gezogen ist. Dieser Schlauch wird nach Absenkung des Saugrohres im Filterrohr so aufgeblasen, dass er sich abdichtend an den Filterrohrinnenmantel anlegt. In den Zwischenraum zwischen den beiden derart aufgeblasenen Schläuchen wird nunmehr über eine Leitung ein aushärtbares Material, vorzugsweise Kunststoffschaum unter Druck eingebracht, so dass das aushärtbare Material sich in den verbleibenden Ringraum zwischen dem Saugrohr oder den Saugrohren sowie in den höhengleichen um das Filterrohr angeordneten gasdurchlässigen Bereichen ergießt und anschließend zu einer gasdichten Masse aushärtet. Je noch Porosität der Filterstrecken und dem hierdurch bestimmten Fließwiderstand ist der Druck abzustimmen, mit dem das aushärtbare Material eingepresst wird. Dieser Druck soll so groß sein, dass die Filterstrecke in dem betreffenden Bereich über ihren gesamten Durchmesser, d. h. bis zum Rand der Bohrung bzw. des Bohrungsmantels eingeführt wird und nach Aushärtung eine gasdichte Zone bildet, so dass in dem darunter liegenden Bereich eine Absaugung nur über das Saugrohr möglich ist.

Vorzugsweise wird der aufblasbare Schlauch mit dem Saugrohraußenmantel durch Kleben verbunden. Als aushärtbares Material bietet sich aufschäumbares Polyurethan und/oder niedrigviskos angerührtes Material aus Mineralien, vorzugsweise aus Ton oder Mischungen hieraus an.

Verwendet man mehrere Saugrohre, deren Ansaugenden in unterschiedlichen Tiefen münden, so sind diese Saugrohre vorzugsweise konzentrisch angeordnet.

Weitere Ausführungsformen der Erfindung werden im Folgenden anhand der Zeichnungen beschrieben. Es zeigen:
- Fig. 1: eine prinzipielle Querschnittsansicht eines Gasbrunnens vor der Ertüchtigung,
- Fig. 2: eine prinzipielle Ansicht eines Gasbrunnens nach der Ertüchtigung,

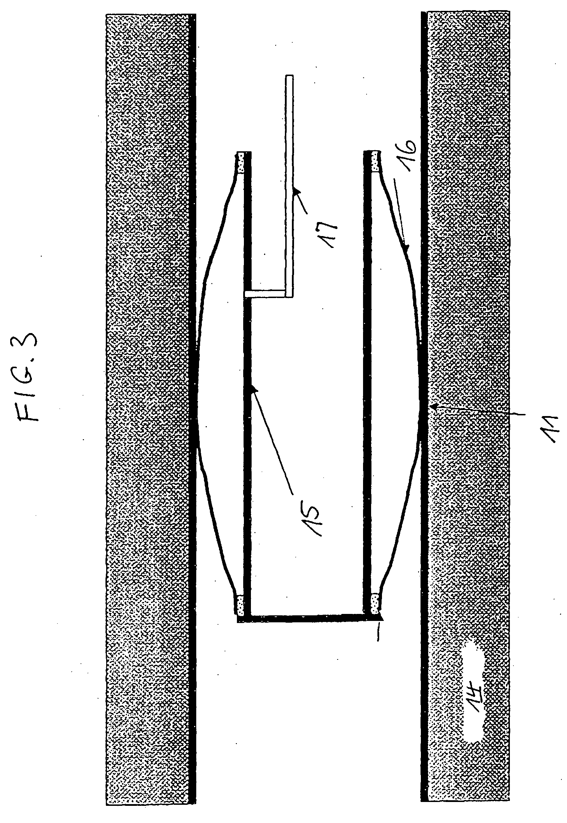

- Fig. 3: eine Prinzipskizze einer Teilquerschnittsansicht im Bereich eines Saugrohres mit aufgeklebtem Schlauch und
- Fig. 4: eine Querschnittsansicht durch einen Teil der Filterstrecke eines Brunnen mit eingeführtem und über Schläuche fixierten Rohr.

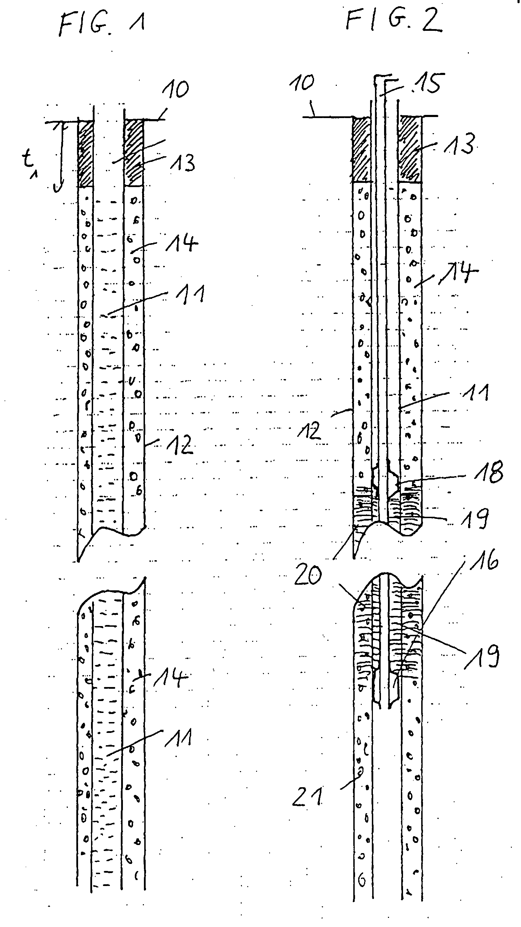

Aus Fig. 1 ist ersichtlich, dass das Filterrohr 11 eines Gasbrunnens von der Geländekanteoberfläche 10 bis in tiefe Bereiche über dem Deponiegrund ragen kann. Das Filterrohr 11 liegt zentrisch zu einem Brunnenrohr 12 oder einer gebohrten festen Brunnenwandung. Zwischen dem Innenmantel 12 und dem Filterrohr 11 ist über eine Tiefe t₁ ein gasdichtes Material, z. B. Ton 13 verfüllt, wobei sich die Tiefe t₁ auf 3 bis 4 m erstrecken kann. In diesem Bereich kann das Rohr 11 auch als Vollrohr ausgebildet sein. Unterhalb der gasdichten Schicht 13 ist eine Kiesschüttung 14 rings um das Filterrohr 11 angeordnet, so dass über entsprechende Mantelöffnungen des Filterrohres Gas aus dem Deponiekörper abgesogen werden kann. Es ist offensichtlich, dass über den Gasbrunnen nach Fig. 1, dessen Gesamttiefe beispielsweise 30 m beträgt, nur ein einheitlicher Unterdruck eingestellt werden kann, der dazu führt, dass in den Deponiezonen, in denen die freien Poren größer sind, mehr Gas abgezogen werden kann als in porenärmeren Zonen bzw. Zonen mit einer kleineren Porosität. Regelmäßig wird bei Anlegen eines Unterdruckes im Filterohr aus den GOK-nahen Schichten mehr Gas abgesaugt als aus den tieferen Schichten. Unter Umständen kann es sogar zu einem "Kurzschluss" kommen, etwa dann, wenn brunnennahe Randbereiche bis zu Tiefen über 4 m Risse bekommen oder die Schicht 13 undicht wird, so dass die aus dem Filterrohr angesaugte Luft im wesentlichen unmittelbar aus der Umgebungsluft (oberhalb der GOK 10) stammt.

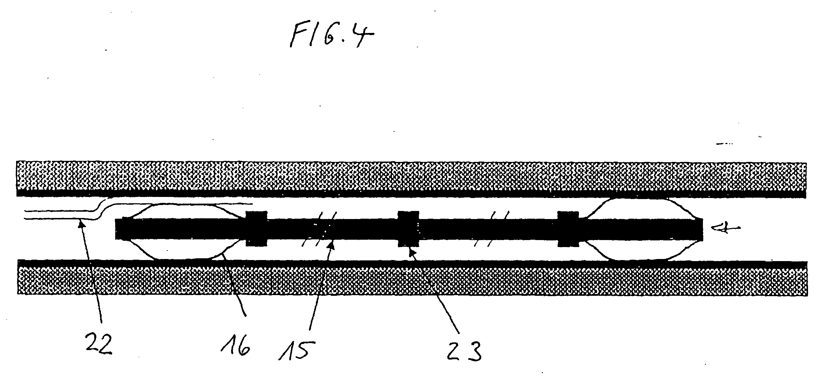

Wie aus Fig. 2 ersichtlich wird in das Filterrohr 11 ein Saugrohr 15 eingelassen, beispielsweise von der Oberkante des Brunnens bis in eine Tiefe von mindestens 23 m. In einem Bereich zwischen 22 und 23 m ist dieses Saugrohr 15 mit einem Schlauch 16 überzogen, der an den Enden mit dem Rohr verklebt oder sonst wie abgedichtet ist. Der Innenraum des Schlauches 16 ist über eine Zuleitung 17 mit einer Druckluftquelle verbunden, durch die der Schlauch 16 aufgeblasen wird. Entsprechendes gilt für den Schlauch 18 in einer Tiefe in dem Bereich zwischen 19 und 20 m. Durch das Aufblasen des Schlauches legt sich dieser dicht und fest an den Innenmantel des Filterrohres 11 an. Nach Aufblasen der beiden Schläuche 16 und 18 ergibt sich zwischen den Schläuchen ein Ringraum 19, der sich zwischen dem Saugrohr 15 und dem Innenmantel des Filterrohres 11 erstreckt sowie ein weiterer Ringraum 20 zwischen dem Außenmantel des Filterrohres 11 und dem Mantel der Bohrung 12. Wird, etwa über eine Leitung 22 (siehe Fig. 4) ein Zweikomponenten-Polyurethanschaum eingedrückt, so füllt dieser Schaum zunächst den genannten Ringraum 19 als auch den darumliegenden Ringraum 20 aus. Nach Aufschäumen und Aushärtung entsteht eine gasdichte Schicht, so dass über das Saugrohr 15 aus der unterhalb der gasdichten Zone 19, 20 liegenden Bereichen 21 der Kiesschicht Gas angesogen werden kann. Will man mehrere Saugbereiche erzeugen, werden in entsprechender Weise mehrere Saugrohre 15 verwendet, die jeweils in einer absaugbaren Zone münden, die sich unterhalb einer mit Polyurethan verfüllten Kiesschüttung befinden. Da jeder Saugbereich über ein getrenntes Saugrohr 15 erreicht wird, kann jeder Bereich unabhängig von anderen Bereichen abgesaugt werden, insbesondere können unterschiedliche Saugdrücke verwendet werden.

Der Vorteil einer solchen Umrüstung eines Gasbrunnens besteht in den erheblich niedrigeren Kosten gegenüber neu zu installierenden Saugbohrungen oder neu zu errichtenden Brunnen.

Eine Dichtung mit Kunststoffschaum ist auch einfach zu fertigen. Alternativ können auch Materialien wie niedrigviskos angerührte Mineralstoffe wie z. B. Ton oder ähnliches, gegebenenfalls in einer Mischung mit Kunststoff eingesetzt werden. Mit dem erfindungsgemäßen Verfahren lassen sich eine oder mehrere diskret absaugbare Bereiche erzeugen. Die nach oben geführten, ggf. mit Muffen 23 verbundenen Gasrohre 15 sollen einen Durchmesser von 50 bis 75 mm haben und vorzugsweise nebeneinander oder als konzentrische Rohre angeordnet sein.

## Patentansprüche

1. Gasbrunnen zur Methangasgewinnung aus Deponien, mit einer in ein Haufwerk aus Abfällen eingebrachten Bohrung, in der ein Filterrohr (11) angeordnet ist, wobei zwischen dem Filterrohr (11) und dem Mantel der Bohrung (12) eine Materialsäule angeordnet ist, die unterhalb der Geländeoberkante (10) gasundurchlässig ist und die in darunter liegenden Bereichen aus einer Kiesschüttung besteht,
**dadurch gekennzeichnet, dass** in das Filterrohr (11) mindestens ein im Durchmesser kleineres Saugrohr (15) eingezogen ist, um dessen Außenmantel über eine begrenzte Höhe ein zwischen dem Filterrohr (11) und dem Saugrohr (15) verbleibender Raum und ein in der gleichen Höhe liegender Bereich (20) der Kiesschüttung mit einem ausgehärteten Material zu einer gasundurchlässigen Zone verfüllt ist, so dass unterhalb dieser Zone liegenden Bereiche (21) nur über das Saugrohr (15) besaugbar sind, wobei
über den Außenmantel des Saugrohrs (15) an zwei im Abstand angeordneten Stellen jeweils ein aufblasbarer Schlauch (16, 18) gezogen ist, der nach Absenkung des Saugrohrs (15) im Filterrohr (11) so aufblasbar ist, dass er sich abdichtend an den Filterrohrinnenmantel anlegt und hiernach über eine Leitung (22) ein aushärtbares Material in einen zwischen den Schläuchen (16, 18) verbleibenden Ringraum in das Filterrohr (11) unter Druck so einbringbar ist, dass es sich in dem verbleibenden Ringraum sowie in höhengleichen um das Filterrohr (11) angeordneten gasdurchlässigen Bereichen (20) ergießt und anschließend zu einer gasdichten Masse aushärtet, wobei ein Bereich (21) unterhalb dieser gasdichten Masse nur noch über das Saugrohr (15) absaugbar ist.

2. Verfahren zur Umrüstung von in Deponien angeordneten Gasbrunnen, die in einer Bohrung ein durchmesserkleineres Filterrohr (11) aufweisen, wobei zwischen dem Filterrohr (11) und dem Bohrungsmantel eine Schüttung angeordnet ist, die unterhalb der Geländeoberkante (10) gasdicht und in darunter liegenden Bereichen gasdurchlässig ist, **dadurch gekennzeichnet, dass** in das Filterrohr (11) mindestens ein Saugrohr (15) eingezogen wird, über dessen Außenmantel an zwei im Abstand angeordneten Stellen jeweils ein aufblasbarer Schlauch (16, 18) gezogen ist, der nach Absenkung des Saugrohres (15) im Filterrohr (11) so aufgeblasen wird, dass er sich abdichtend an den Filterrohrinnenmantel anlegt, dass hiernach über eine Leitung (22) ein aushärtbares Material, vorzugsweise Kunststoffschaum in einem zwischen den Schläuchen (16, 18) verbleibenden Ringraum (19) in das Filterrohr (11) unter Druck so eingebracht wird, dass es sich in dem verbleibenden Ringraum sowie in höhengleichen um das Filterrohr (11) angeordneten gasdurchlässigen Bereichen (20) ergießt und anschließend zu einer gasdichten Masse aushärtet, wonach ein Bereich (21) unterhalb dieser gasdichten Masse nur noch über das Saugrohr (15) absaugbar ist.

3. Verfahren nach Anspruch 2, **dadurch gekennzeichnet, dass** der aufblasbare Schlauch (16, 18) mit dem Saugrohraußenmantel durch Kleben verbunden ist.

4. Verfahren nach Anspruch 2 oder 3, **dadurch gekennzeichnet, dass** als aushärtbares Material aufschäumbares Polyurethan und/oder niedrig viskos angerührte Mineralmaterialien, vorzugsweise Tone eingebracht werden.

5. Verfahren nach einem der Ansprüche 2 bis 4, **dadurch gekennzeichnet, dass** die Saugrohre konzentrisch angeordnet werden und/oder jedes der Saugrohre einen anderen Bereich (21) besaugt.

## Claims

1. Gas well for extracting methane from landfills comprising a borehole which is made in a heap of refuse and inside of which a filtering tube (11) is placed, wherein between the filtering tube (11) and the lateral surface of the borehole (12) a material column is placed which underneath the ground surface (10) is gas-tight and, in the areas located under the ground surface, consists of a gravel heap
**characterized in that**
at least one suction tube (15) having a diameter less than that of the filtering tube is inserted into the filtering tube (11), around the outer lateral surface of the suction tube (15) along a limited height the space remaining between the filtering tube (11) and the suction tube (15) and an area (20) of the gravel heap at the same height are filled in with a hardened material up to a gas-tight zone so that areas (21) located underneath this zone can be evacuated by suction only via the suction tube (15), wherein at each of two places arranged at a distance in each case an inflatable tube (16, 18) is pulled over the lateral surface of the suction tube (15), the tube (16, 18) being inflatable after lowering the suction tube (15) in the filtering tube (11) in such a manner that it lies so as to seal against on the filtering tube inner lateral surface, and hereafter via a line (22) a hardenable material is introduced into the filtering tube (11) in an annular space remaining between the inflatable tubes (16, 18) under pressure in such a manner that it flows in the remaining annular space and also in the gas-permeable areas (20) arranged at the same height around the filtering tube (11) and subsequently hardens to form a gas-tight mass, after which an area (21) below this gas-tight mass can be evacuated by suction only via the suction tube (15).

2. Method for retrofitting gas wells located in landfills which, in a borehole, have a filtering tube (11) whose diameter is less than that of the borehole, between the filtering tube (11) and the lateral surface of the borehole a heap being arranged which underneath the ground surface (10) is gas-tight and in areas lying underneath is gas-permeable, **characterized in that** at least one suction tube (15) is inserted into the filtering tube (11), over the lateral surface of the suction tube at each of two places arranged at a distance in each case an inflatable tube (16, 18) being pulled which, after lowering the suction tube (15) in the filtering tube (11) is inflated in such a manner, that is lies so as to seal against on the filtering tube inner lateral surface, that afterwards via a line (22) a hardenable material, preferably foamed plastic is introduced into the filtering tube (11) in the annular space (19) remaining between the inflatable tubes (16, 18) under pressure in such a manner that it flows in the remaining annular space and also in the gas-permeable areas (20) arranged at the same height around the filtering tube (11) and subsequently hardens to form a gas-tight mass, after which an area (21) below this gas-tight mass can be evacuated by suction only via the suction tube (15).

3. Method according to claim 2, **characterized in that** the inflatable tube (16, 18) is connected with the suction tube inner lateral surface by glueing.

4. Method according to claim 2 or 3, **characterized in that** foamable polyurethane and/or mixed low viscose mineral materials, preferably clays are introduced as hardenable material.

5. Method according to one of the claims 2 to 4, **characterized in that** the suction tubes are arranged concentrically and/or each of the suctions tubes evacuates another area (21).

## Revendications

1. Puits de gaz pour l'extraction de méthane en provenance de décharges, comprenant un forage qui est réalisé dans un tas de déchets et dans lequel est disposé un tube filtrant (11), entre ledit tube filtrant (11) et la surface latérale du forage (12) étant disposée une colonne de matériau qui est imperméable au gaz au-dessous du bord supérieur de terrain et qui, dans des zones situées là-dessous, se compose d'un remblai de gravier, **caractérisé par le fait que** dans le tube filtrant (11) est inséré au moins un tube d'aspiration (15) de diamètre plus faible autour de la surface latérale extérieure duquel, sur une hauteur limitée, un espace restant entre le tube filtrant (11) et le tube d'aspiration (15) ainsi qu'une zone (20) du remblai de gravier située au même niveau sont remplis d'un matériau durci pour former une zone imperméable au gaz, de sorte que des régions (21) situées au-dessous de cette zone ne peuvent être évacuées par aspiration que via le tube d'aspiration (15), dans lequel, sur deux points disposés à distance l'un de l'autre, respectivement un tuyau souple (16, 18) gonflable est mis sur la surface latérale extérieure du tube d'aspiration (15), qui, après avoir abaissé le tube d'aspiration (15) dans le tube filtrant (11), peut être gonflé de manière à s'appliquer contre la surface latérale intérieure du tube filtrant en assurant l'étanchéité et que, ci-après, un matériau durcissable peut être introduit sous pression par une conduite (22) dans un espace annulaire restant entre les tuyaux souples (16, 18), dans le tube filtrant (11), de telle sorte qu'il se déverse dans l'espace annulaire restant ainsi que dans des régions (20) perméables au gaz disposées au même niveau autour du tube filtrant (11) et se durcit ensuite pour former une masse étanche au gaz, une région (21) située au-dessous de cette masse étanche au gaz ne pouvant plus être évacuée par aspiration que via ledit tube d'aspiration (15).

2. Procédé d'adaptation de puits de gaz disposés dans des décharges, qui présentent, dans un forage, un tube filtrat (11) de diamètre plus faible, entre ledit tube filtrant (11) et la surface latérale du forage étant disposé un remblai qui est étanche au gaz au-dessous du bord supérieur de terrain (10) et qui, dans des zones situées là-dessous, est perméable au gaz, **caractérisé par le fait que** dans le tube filtrant (11) est inséré au moins un tube d'aspiration (15) sur la surface latérale extérieure duquel, sur deux points disposés à distance l'un de l'autre, est mis respectivement un tuyau souple (16, 18) gonflable, qui, après avoir abaissé le tube d'aspiration (15) dans le tube filtrant (11), est gonflé de manière à s'appliquer contre la surface latérale intérieure du tube filtrant en assurant l'étanchéité, que, ci-après, un matériau durcissable, de préférence de la mousse plastique, est introduit sous pression dans un espace annulaire (19) restant entre les tuyaux souples (16, 18), dans le tube filtrant (11), de telle sorte qu'il se déverse dans l'espace annulaire restant ainsi que dans des régions (20) perméables au gaz disposées au même niveau autour du tube filtrant (11) et se durcit ensuite pour former une masse étanche au gaz, ce après quoi une région (21) située au-dessous de cette masse étanche au gaz ne peut plus être évacuée par aspiration que via ledit tube d'aspiration (15).

3. Procédé selon la revendication 2, **caractérisé par le fait que** le tuyau souple (16, 18) gonflable est relié par collage à la surface latérale extérieure du tube d'aspiration.

4. Procédé selon la revendication 2 ou 3, **caractérisé par le fait que** du polyuréthane moussable et/ou des matériaux minéraux gâchés à basse viscosité, de préférence des argiles, sont introduits en tant que matériau durcissable.

5. Procédé selon l'une quelconque des revendications 2 à 4, **caractérisé par le fait que** les tubes d'aspiration sont disposés de manière concentrique et/ou que chacun des tubes d'aspiration fait évacuer par aspiration une autre région (21).
